# EUROPÄISCHE PATENTANMELDUNG

(11) **EP 3 095 737 A1**
(43) Veröffentlichungstag der Anmeldung: **23.11.2016**
(21) Anmeldenummer: 16171984.4
(22) Anmeldetag: 05.12.2006
(51) Int. Cl.: B65G 37/02, G01N 23/04, G01V 5/00, B64F 1/36

(54) **KONTROLLSTATION ZUR ÜBERPRÜFUNG VON HANDGEPÄCK UND ANDEREN VON PERSONEN MITGEFÜHRTEN GEGENSTÄNDEN**

(30) Priorität: 09.02.2006 DE 102006006208
(62) Teilanmeldung aus: 06840953.1
(71) Anmelder: Smiths Heimann GmbH, 65205 Wiesbaden (DE)
(72) Erfinder: Henkel, Rainer, 55444 Schweppenhausen (DE); Jentsch, Harald, 65510 Idstein (DE); Thoma, Helmut, 55131 Mainz (DE)
(74) Vertreter: Greif, Thomas

(57) **Zusammenfassung**

Zur Überprüfung von Handgepäck und anderen von Personen mitgeführten Gegenständen sind Kontrollstationen mit einem Kontrollgerät (1), insbesondere einem Röntgenprüfgerät, einem sich durch das Kontrollgerät (1) erstreckenden Förderer, einer vor dem Förderer (2) angeordneten Auflagestelle (3) und einer hinter dem Förderer (2) angeordneten Entnahmestelle (4) für die Gegenstände und mit auf den Förderer (2) aufsetzbaren Transportwannen (10) bekannt. In die Transportwannen (10) werden kleine Gegenstände und Kleidungsstücke gelegt und zur Überprüfung durch das Kontrollgerät (1) gefördert. Neben oder unterhalb des durch das Kontrollgerät (1) führenden Förderers (2) ist ein Rückförderer (11) für die Transportwannen (10) angeordnet, der von der Entnahmestelle (4) hinter den Förderer (2) zumindest bis in den Bereich der Auflagestelle (3) vor dem Förderer (2) reicht.

## Beschreibung

Die Erfindung betrifft eine Kontrollstation zur Überprüfung von Handgepäck und anderen von Personen mitgeführten Gegenständen mit einem Kontrollgerät, insbesondere einem Röntgenprüfgerät, einem sich durch das Kontrollgerät erstreckenden Förderer zum Fördern der Gegenstände durch das Kontrollgerät, einer vor dem Förderer angeordneten Auflagestelle und eine hinter dem Förderer angeordneten Entnahmestelle für die Gegenstände und mit auf den Förderer aufsetzbaren Transportwannen, in die kleine Gegenstände und Kleidungstücke gelegt und zur Überprüfung durch das Kontrollgerät gefördert werden.

Zur Sicherheitskontrolle von Handgepäck und anderen von Personen mitgeführten Gegenständen, z. B. zur Sicherheitskontrolle auf Flughäfen, werden bekannter Weise Kontrollstationen mit Röntgenprüfgeräten verwendet, von denen die mitgeführten Gegenstände durchstrahlt werden. Die zu prüfenden Gegenstände werden auf einem Förderer, üblicherweise einem Transportband, durch das Prüfgerät gefördert, das von einem Operator bedient wird. An der Eingangsseite ist vor dem Förderer eine Rollenbahn angeordnet, die zur Auflage der zu prüfenden Gegenstände dient. Analog ist an der Ausgangsseite im Anschluß an den Förderer eine Rollenbahn angeordnet, von der die geprüften Gegenstände entnommen werden können.

Zum Transport von kleinen Gegenständen (Geldbörsen, Mobiltelefonen, Laptops, kleine Rücksäcke, etc.) und Kleidungsstücken werden bekannter Weise Transportwannen verwendet, in die diese Gegenstände eingelegt werden. Genauso wie größere Gegenstände (Taschen etc.) werden die Transportwannen mit den darin befindlichen Gegenständen auf den Förderer aufgelegt und von diesem durch das Kontrollgerät gefördert. Nach der Kontrolle werden die Gegenstände an der Entnahmestelle aus den Wannen von den Passagieren entnommen. Nach dem Entleeren müssen die Transportwannen wieder an den Eingang der Kontrollstation zurückgebracht werden.

Dazu werden sie entweder durch Bedienungspersonal zurückgetragen oder werden an der Entnahmestelle angehoben und auf eine nicht angetriebene Rollenstrecke umgesetzt und auf dieser zurückgeschoben. Alle bekannten Verfahren sind unergonomisch und belasten das Bedienpersonal körperlich und zeitlich in erheblichem Maße.

Der Erfindung liegt daher die Aufgabe zugrunde, eine Kontrollstation, bei der Transportwannen verwendet werden, so zu verbessern, dass die zeitliche und körperliche Belastung des Bedienpersonals reduziert wird.

Diese Aufgabe wird nach der Erfindung dadurch gelöst, dass neben oder unterhalb des durch das Kontrollgerät führenden Förderers ein Rückförderer für die Transportwannen angeordnet ist, der von der Entnahmestelle hinter dem Förderer zumindest bis in den Bereich der Auflagestelle vor dem Förderer reicht.

Nach der Erfindung werden die Transportwannen automatisch vom Ende der Kontrollstrecke zum Anfang der Kontrollstrecke zurückgefördert. Die zeitliche und körperliche Belastung des Bedienungspersonals wird reduziert. Somit kann das Bedienungspersonal effizienter eingesetzt werden.

Die Anordnung und Gestaltung des Rückförderers für die Wannen ist dabei so gewählt, dass die Wannen mit minimalen körperlichen und zeitlichem Aufwand an der Entnahmestelle des Hauptförderers an den Rückförderer übergeben werden. Die Übergabe kann dabei entweder durch eine Servicekraft, beispielsweise die Bedienperson des Kontrollgeräts, durch den Passagier selbst oder automatisch erfolgen. Beim Rücktransport liegen die Wannen entweder flach auf einem Förderer oder stehen hochkant auf diesem. Dazu werden entweder entsprechend breite oder schmale Rollenförderer oder auch Bandförderer eingesetzt. Der Rücktransport der Wannen in hochkant stehender Position hat den Vorteil, dass ein sehr schmaler Förderer eingesetzt werden kann, der nur sehr wenig Platz benötigt. Der liegende Rücktransport ermöglicht es, den Rückförderer unterhalb des Förderers und des Kontrollgeräts anzuordnen.

Die Unteransprüche enthalten bevorzugte, für verschiedene Anwendungsfälle unter verschiedenen räumlichen Bedingungen vorgesehene Ausführungsformen der Erfindung.
- Figur 1: zeigt die Schrägansicht einer Kontrollstation mit einem unterhalb des Kontrollgeräts angeordneten Rückförderer für die Transportwannen.
- Figur 2: zeigt eine Draufsicht auf eine Ausführungsform, bei der die Wannen liegend neben dem Kontrollgerät zurückgefördert werden.
- Figur 3: zeigt eine Schrägansicht der Ausführungsform nach Figur 2.
- Figur 4: zeigt eine Ausführungsform, bei der die Wannen auf der Passagierseite liegend zurückgefördert werden.
- Figur 5: zeigt eine Ausführungsform, bei der die Wannen hochkant stehend auf der Operatorseite zurückgefördert werden.
- Figur 6: zeigt eine Schrägansicht der Ausführungsform nach Figur 5.
- Figur 7: zeigt eine Ausführungsform, bei der die Wannen hochkant stehend auf der Passagierseite zurückgefördert werden.

Die Figuren 8 - 11 zeigen drei verschiedene Möglichkeiten, die Wanne für einen hochkant stehenden Rücktransport von der liegenden in eine stehende Position zu bringen, wobei

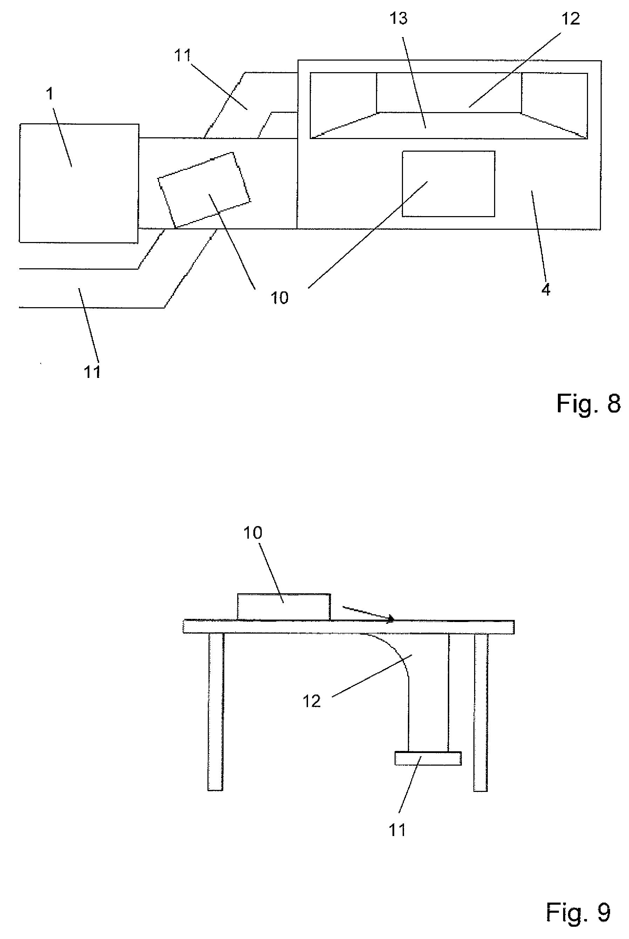

Figur 8 und 9 einen schräg nach unten verlaufenden Schacht für die Wannen zeigt,

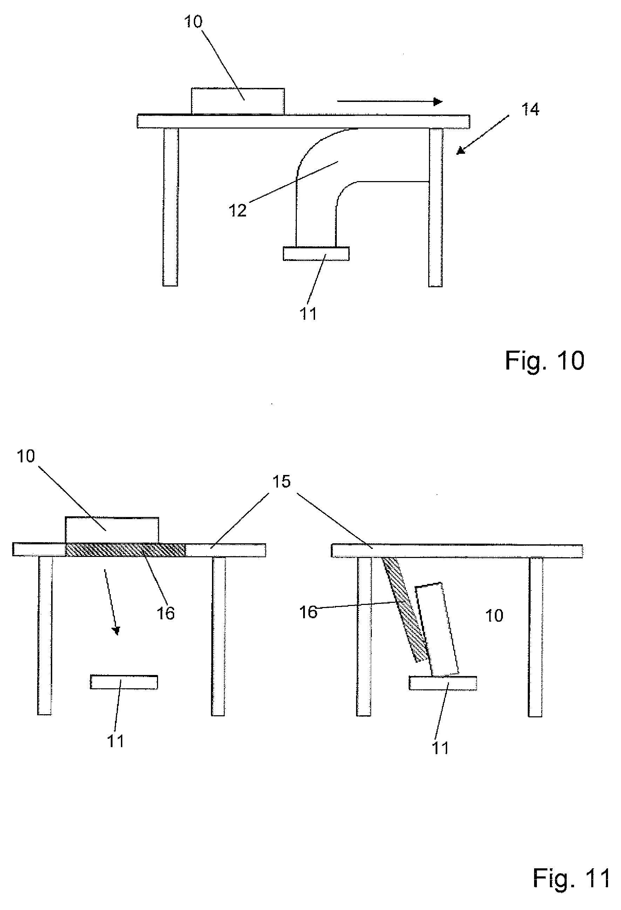

Figur 10 einen um 90° gekrümmt verlaufenden, manuell zu beschickenden Schacht, und

Figur 11 einen Tisch mit einer nach unten öffnenbaren Klappe, auf der die Wannen auf den Rückförderer gleiten.

Alle in den Figuren dargestellten Kontrollstationen dienen zur Überprüfung von Handgepäck und anderen von Personen mitgeführten Gegenständen. Sie werden bevorzugt zur Sicherheitskontrolle auf Flughäfen eingesetzt, um die von Passagieren mitgeführten Gegenstände auf Waffen, Explosivstoffe oder andere unzulässige Gegenstände zu kontrollieren. Jede Kontrollstation enthält ein Kontrollgerät 1, bevorzugt ein Röntgenprüfgerät, mit dem die mitgeführten Gegenstände durchstrahlt werden.

Die zu prüfenden Gegenstände werden auf einem Förderer 2, bevorzugt ein Bandförderer, durch das Kontrollgerät gefördert. An der Eingangsseite der Kontrollstation ist vor dem Förderer 2 eine Auflage 3 angeordnet, auf der die zu prüfenden Gegenstände aufgelegt und dem Förderer 2 zugeführt werden. Üblicherweise besteht die Auflagestelle 3 aus einer Rollenstrecke mit frei drehbaren Rollen. An der Ausgangsseite schließt sich an den Förderer 2 eine Entnahmestelle 4 an, an der die geprüften Gegenstände von dem Passagier entnommen werden. Auch die Entnahmestelle 4 besteht üblicherweise aus einer Rollenstrecke mit frei drehbaren Rollen, der die geprüften Gegenstände aus dem Kontrollgerät 1 von dem Förderer 2 zugefördert werden. Auf bekannte Weise ist neben der Entnahmestelle 4 eine Nachkontrollstelle 5 angeordnet, der die Gegenstände von einem alternativen Förderer 6 hinter dem Kontrollgerät zugefördert werden, falls die Überprüfung durch das Kontrollgerät 1 nicht eindeutig ist, so dass eine manuelle Nachprüfung im Beisein einer Bedienperson erforderlich ist.

Neben dem Kontrollgerät 1 befinden sich an der Operatorseite O der Bedienplatz für die Bedienperson, der einen Bildschirm enthält, auf dem das Ergebnis der Durchleuchtung angezeigt wird. Die Nachkontrollstelle 5 befindet sich ebenfalls an der Operatorseite, damit sie von der Bedienperson für eine Nachkontrolle schnell erreicht werden kann. Eine von der Bedienperson oder automatisch auslösbare Weiche 7 in der Förderstrecke 2 ermöglicht es, auf die Förderstrecke 6 umzuschalten, so dass die Gegenstände nicht der Entnahmestelle 4, sondern der Nachkontrollstelle 5 zugefördert werden.

Die Passagiere bewegen sich an der zur Operatorseite O entgegen gesetzten Seite P durch die Kontrollstation. Daher befindet sich die Gepäckentnahme 4 auf der Passagierseite P.

Zum Transport von kleinen Gegenständen (Geldbörsen, Mobiltelefonen, Laptops, kleine Rucksäcke, etc.) und Kleidungsstücken durch das Kontrollgerät 1 werden Transportwannen 10 verwendet, in die diese Gegenstände und die Kleidungsstücke eingelegt werden. Die Transportwannen 10 werden auf die Rollen der Auflegestelle 3 aufgesetzt, wo die Passagiere die kleinen Gegenstände und die Kleidungsstücke in die Wannen 10 einlegen. Nach der Überprüfung im Kontrollgerät 1 werden an der Entnahmestelle 4 von den Passagieren die geprüften Gegenstände wieder aus den Wannen 10 entnommen.

Allen Ausführungsformen nach der Erfindung ist gemeinsam, das neben oder unterhalb des durch das Kontrollgerät 1 führenden Förderers 2 ein Rückförderer 11 für die leeren Transportwannen 10 angeordnet ist, der von der Entnahmestelle 4 zumindest bis in den Bereich der Auflagestelle 3 vor dem Förderer 2 reicht. Von dem Rückförderer 11 werden die Transportwannen 10 automatisch vom Ende der Kontrollstrecke zum Anfang der Kontrollstrecke zurückgefördert. Es ist nicht erforderlich, dass eine Bedienperson die Transportwannen 11 zurückträgt oder manuell auf einer Rollenstrecke zurückschiebt. Die zeitliche und körperliche Belastung des Bedienungspersonals wird somit erheblich reduziert.

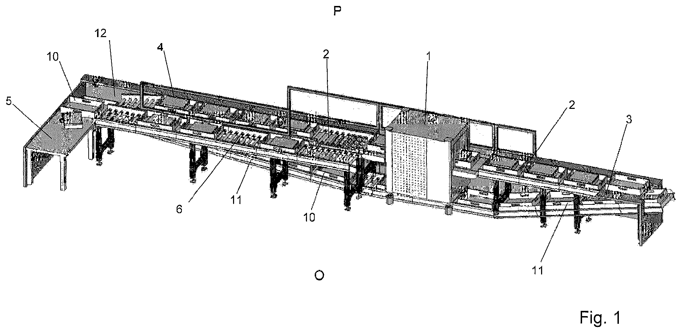

In Figur 1 ist eine Ausführungsform dargestellt, bei der der Rückförderer 11 unterhalb des Förderers 2 und des Kontrollgeräts 1 verlaufend angeordnet ist. Der Rückförderer 11 enthält angetriebene Bänder oder Rollen und weist eine Transportbreite auf, die zumindest der Breite der Transportwannen 11 entspricht. Die Transportwannen 11 können so liegend zurücktransportiert werden, um die erforderliche Höhe unterhalb des Kontrollgeräts 1 und des Förderers 2 möglichst gering zu halten. Die Übergabestelle 12 am Ende der Kontrollstrecke, an der die geleerten Wannen 10 von dem Förderer 2 an den Rückförderer 11 übergeben werden, enthält entweder frei drehbare oder angetriebene Rollen. Bei frei drehbaren Rollen an der Übergabestelle 12 schiebt entweder eine Bedienperson oder der Passagier die leeren Wannen 10 auf den Rückförderer 11. Bei angetriebenen Rollen an der Übergabestelle 12 kann die Übergabe automatisch, beispielsweise durch eine Bedienperson ausgelöst, erfolgen. Die Übergabe der leeren Transportwannen 10 von dem Rückförderer 11 auf die Auflagestelle 3 zu Beginn der Kontrollstelle erfolgt ebenfalls entweder manuell durch eine Bedienungsperson oder den Passagier selbst, oder an dieser Stelle sind entsprechende, von einer Bedienungsperson aktivierbare Fördermittel angeordnet.

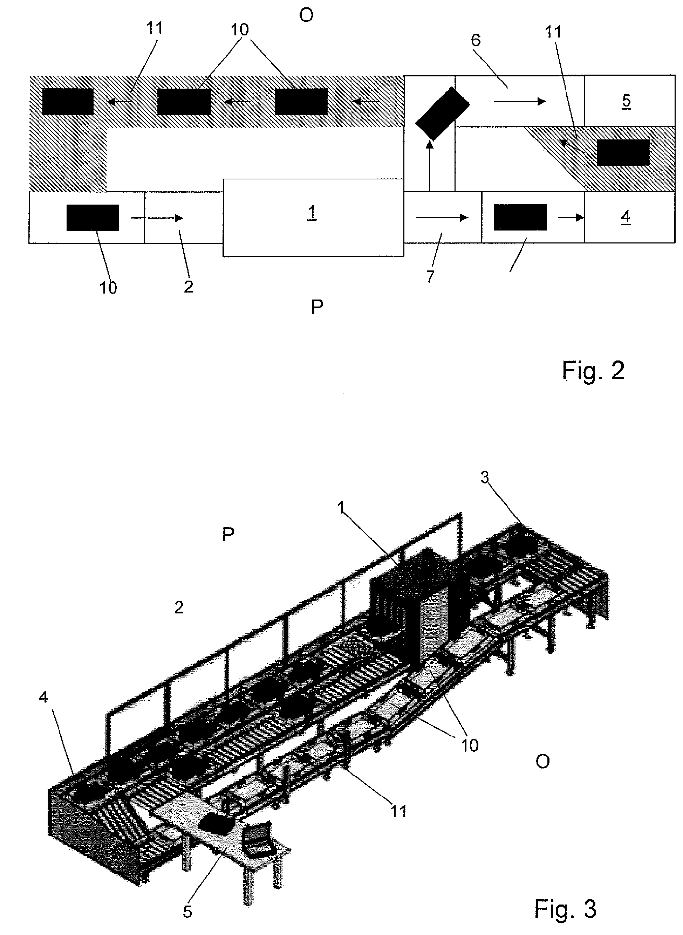

In den Figuren 2 und 3 ist eine andere Ausführungsform dargestellt, bei der der Rückförderer 11 für die Wannen 10 neben dem Förderer 2 auf der Operatorseite O verlaufend angeordnet ist. In den beiden Figuren 2 und 3 sind auch die Nachkontrollstelle 5 und die Weiche 7 mit dem zur Nachkontrollstelle 5 führenden Förderer 6 dargestellt. Auch bei dieser Ausführungsform werden die Wannen 10 liegend zurückgefördert. Der Rückförderer 11 beginnt zwischen der Entnahmestelle 4 und der Nachkontrollstelle 5 und verläuft zu Beginn in einer Ebene tiefer als die Förderer 2 und 6. Diese tiefere Ebene ist in den Figuren schraffiert gezeichnet. Zwischen der Entnahmestelle 4 und der Nachkontrolle 5 ist eine schräg nach unten zu dem Rückförderer 11 führende Förderfläche angeordnet, auf der die Transportwannen 10 nach unten auf den Rückförderer 11 rutschen. Der Rückförderer 11 verläuft auf der Operatorseite bis neben die Auflagestelle 3. Auf seiner letzten Förderstrecke steigt er bis in die Höhe der Auflagestelle 3 an, so dass eine Wanne 10 einfach von dem Ende des Rückförderers 11 auf die Auflagestelle 3 geschoben werden kann.

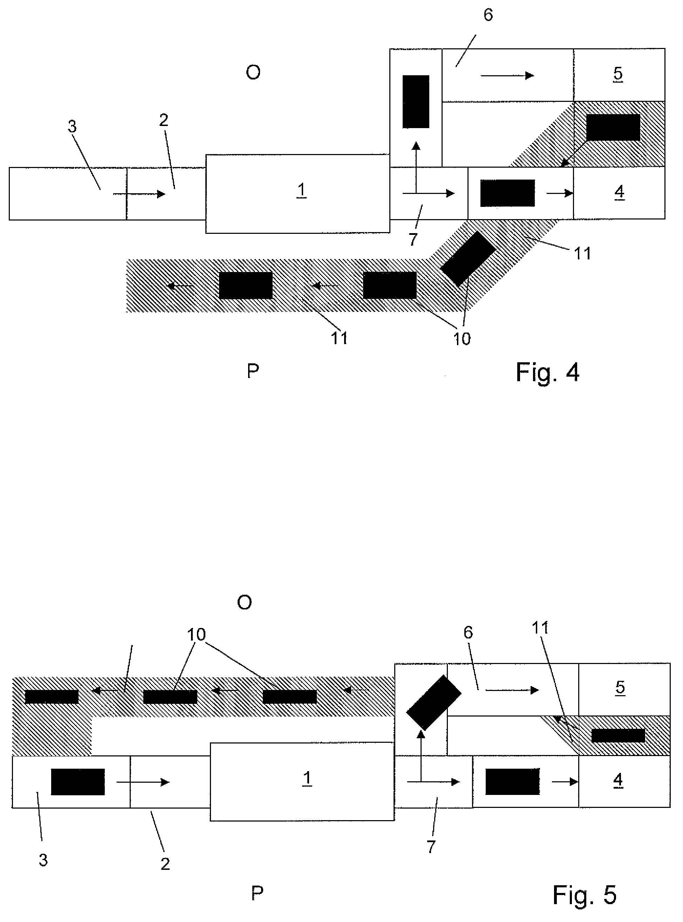

In Figur 4 ist eine weitere Ausführungsform dargestellt, bei der die Wannen 10 auf dem Rückförderer 11 liegend zurücktransportiert werden. Der Aufbau dieser Kontrollstation entspricht der in den Figuren 2 und 3 dargestellten Kontrollstation mit dem Unterschied, dass der Rückförderer 11 für die Wannen 10 auf der Passagierseite P neben dem Förderer 2 verlaufend angeordnet ist. Auch bei dieser Ausführungsform beginnt der Rückförderer zwischen der Entnahmestelle 4 und der Nachkontrollstelle 5 unterhalb der beiden zu diesen Stellen fördernden Förderer 2, 6. Der Rückförderer 11 verläuft zunächst schräg unterhalb des Förderers 2 nach außen auf die Passagierseite P und wird anschließend parallel zum Förderer 2 an dem Kontrollgerät 1 vorbei bis neben die Auflagestelle 3 am Eingang der Kontrollstation geführt.

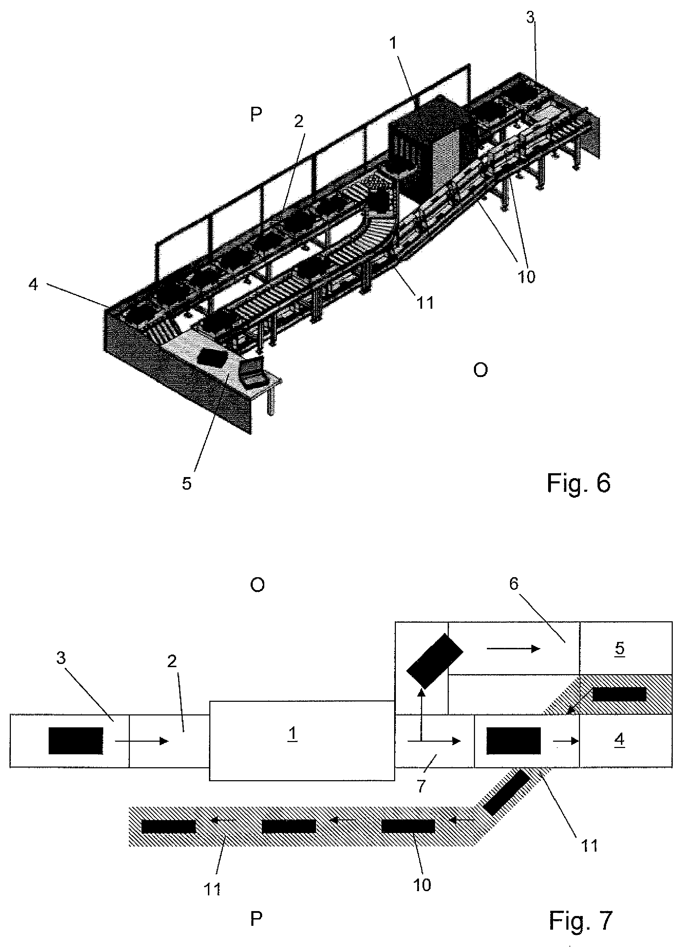

Die Figuren 5 - 7 zeigen Ausführungsformen, bei denen die Wannen 10 auf dem Rückförderer 11 hochkant stehend zurückgefördert werden. Dies hat den Vorteil, dass sehr schmale Förderer 11 (Bandförderer oder Rollenförderer) eingesetzt werden können, die nur sehr wenig Platz benötigen. Der Rückförderer 11 verläuft dabei neben dem durch das Kontrollgerät 1 führenden Förderer 2. Er ist entweder an der Operatorseite O (Figur 5, Figur 6) oder an der Passagierseite P angeordnet (Figur 7). Der Aufbau der jeweiligen Kontrollstation entspricht im Wesentlichen den Ausführungsformen mit liegendem Rücktransport, die in den Figuren 1 - 4 beschrieben sind. Übereinstimmende Teile sind daher auch mit übereinstimmenden Bezugsnummern bezeichnet. Die Ausführungsformen mit Rücktransport der Wannen 10 in hochkant stehender Position weisen zusätzlich am Beginn der Rückförderstrecke Mittel auf, die entweder auf der Entnahmestelle 4 oder auf der Nachkontrollstelle 5 liegenden Wannen 10 aufzurichten und auf dem Rückförderer 11 in eine hochkant stehende Position zu bringen. Verschiedene dieser Mittel sind in den Figuren 8 - 11 dargestellt.

Bei der Ausführungsform nach Figur 8 und 9 führt ein Schacht 12 von der Entnahmestelle 4 nach unten zu dem schmalen Rückförderer 11. Innerhalb des Schachtes 12 führt eine schräge Leitfläche 13 nach unten, die so gestaltet ist, dass eine nach unten rutschende Wanne 10 sich hochkant aufrichtet und sich so auf den Rückförderer 11 stellt. Die Wannen 10 werden entweder von einer Bedienperson oder dem Passagier selbst auf der Entnahmestelle 4 in den Schacht 12 geschoben, nach dem geprüft wurde, dass sich kein Gegenstand mehr in der Wanne 10 befindet. Alternativ ist es möglich, einen motorischen Antrieb vorzusehen, der eine Wanne 10 in den Schacht 12 befördert. Ein spiegelbildlich aufgebauter Schacht ist auch an der Nachkontrollstelle 5 angeordnet, um dort befindliche leere Wannen 10 auf den Rückförderer 11 zu bewegen.

In Figur 10 ist eine Ausführungsform dargestellt, die ebenfalls einen um 90° gekrümmten Schacht 12 aufweist, dessen Eintrittsöffnung sich an der Operatorseite O zwischen der Entnahmestelle 4 und der Nachkontrollstelle 5 befindet. Die Eintrittsöffnung 14 des Schachts 12 befindet sich seitlich unterhalb der Auflagefläche der Entnahmestelle 4 oder der Nachkontrollstelle 5. Eine leere Wanne 10 wird von einer Bedienperson herangezogen und durch die Eintrittsöffnung 14 in den Schacht 12 gesteckt. Bei der Bewegung durch den Schacht 12 wird die Wanne 10 aufgerichtet und steht so hochkant auf dem Rückförderer 11.

Bei der Ausführungsform nach Figur 11 ist in einer Auflagefläche 15, die zwischen der Entnahmestelle 4 und der Nachkontrollstelle 5 in gleicher Höhe mit diesen angeordnet ist, eine nach unten schwenkbare Klappe 16 angeordnet. Die Klappe 16 ist so nach unten klappbar, dass eine Wanne 10 auf ihr nach unten auf den Rückförderer 11 rutscht und sich dabei hochkant stellt. Der Schwenkmechanismus für die Klappe 16 wird von einer Bedienperson betätigt, wenn diese festgestellt hat, dass die Wanne 10 vollständig entleert ist.

## Patentansprüche

1. Kontrollstation zur Überprüfung von Handgepäck und anderen von Personen mitgeführten Gegenständen mit einem Kontrollgerät (1), insbesondere einem Röntgenprüfgerät, einem sich durch das Kontrollgerät (1) erstreckenden Förderer (2) zum Fördern der Gegenstände durch das Kontrollgerät (1), einer vor dem Förderer (2) angeordneten Auflagestelle (3) und eine hinter dem Förderer (2) angeordneten Entnahmestelle (4) für die Gegenstände und mit auf den Förderer (2) aufsetzbaren Transportwannen (10), in die kleine Gegenstände und/oder Kleidungstücke gelegt und zur Überprüfung durch das Kontrollgerät (1) gefördert werden, **dadurch gekennzeichnet, dass** neben oder unterhalb des durch das Kontrollgerät (1) führenden Förderers (2) ein Rückförderer (11) für die Transportwannen (10) angeordnet ist, der von der Entnahmestelle (4) des Förderers (2) bis in den Bereich der Auflagestelle (3) vor dem Förderer (2) reicht.

2. Kontrollstation nach Anspruch 1, **dadurch gekennzeichnet, dass** der Rückförderer (11) unterhalb des Förderers (2) und des Kontrollgeräts (1) verlaufend angeordnet ist.

3. Kontrollstation nach Anspruch 1, **dadurch gekennzeichnet, dass** der Rückförderer (11) neben dem Förderer (2) auf der Operatorseite (O) verlaufend angeordnet ist.

4. Kontrollstation nach Anspruch 1, **dadurch gekennzeichnet, dass** der Rückförderer (11) auf der Passagierseite (P) neben dem Förderer (2) verlaufend angeordnet ist.

5. Kontrollstation nach einem der Ansprüche 1 bis 4, **dadurch gekennzeichnet, dass** die Wannen (10) auf dem Rückförderer (11) liegend zurück transportiert werden.

6. Kontrollstation nach einem der Ansprüche 1 bis 4, **dadurch gekennzeichnet, dass** die Wannen (10) auf dem Rückförderer (11) hochkant stehend zurückgefördert werden.

7. Kontrollstation nach Anspruch 6, **dadurch gekennzeichnet, dass** am Beginn der Rückförderstrecke Mittel angeordnet sind, die liegenden Wannen (10) auf dem Rückförderer (11) in eine hochkant stehende Position zu bringen.

8. Kontrollstation nach einem der Ansprüche 1 bis 7, **dadurch gekennzeichnet, dass** eine neben der Entnahmestelle (4) angeordnete Nachkontrollstation (5), die durch eine durch automatisch oder manuell auslösbare Weiche (7) ansteuerbar ist.
